## Europäisches Patentamt

## European Patent Office

## Office européen des brevets

(19)

(11) Veröffentlichungsnummer: **0 157 757**
**B1**

(12) # EUROPÄISCHE PATENTSCHRIFT

(45) Veröffentlichungstag der Patentschrift:
12.07.89

(21) Anmeldenummer: 85890022.8

(22) Anmeldetag: 30.01.85

(51) Int. Cl.⁴: **F 16 C 33/24**

(54) Hochbelastbares Gleitlager.

(30) Priorität: 27.02.84 AT 627/84

(43) Veröffentlichungstag der Anmeldung:
09.10.85 Patentblatt 85/41

(45) Bekanntmachung des Hinweises auf die Patenterteilung:
12.07.89 Patentblatt 89/28

(84) Benannte Vertragsstaaten:
CH DE FR GB IT LI SE

(56) Entgegenhaltungen:
EP-A-0 057 808
DE-A-2 742 536
FR-A-2 157 072
US-A-2 294 939

Die Akte enthält technische Angaben, die nach
dem Eingang der Anmeldung eingereicht wurden
und die nicht in dieser Patentschrift enthalten sind.

(73) Patentinhaber: **MIBA Gleitlager Aktiengesellschaft,
Hauptstrasse 3, A-4663 Laakirchen (AT)**

(72) Erfinder: **Ehrentraut, Otto, Sudetenplatz 1, A-4810
Gmunden (AT)**
Erfinder: **Ederer, Ulf Gerhard, Dipl.- Ing., Am
Wiesenhof 20, A-4813 Altmünster (AT)**

(74) Vertreter: **Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)**

LIBER, STOCKHOLM 1989

## Beschreibung

Die Erfindung bezieht sich auf ein hochbelastbares Gleitlager, bestehend aus einer tragenden Stützschale und aus einer auf der Stützschale aufgebrachten Lagermetallschicht, die über die Lauffflächenbreite verteilte, sich zumindest im wesentlichen in Laufrichtung erstreckende, nutenartige Ausnehmungen zur Aufnahme eines weicheren Lagerwerkstoffes aufweist, wobei die nutenartigen Ausnehmungen mit einem gegenseitigen, von Ausnehmungsmitte zu Ausnehmungsmitte gemessenen Abstand von höchstens 10 mm voneinander angeordnet sind.

Um die Vorteile eines härteren Lagerwerkstoffes mit dem Vorteil weicherer Lagerwerkstoffe in einem Gleitlager zu vereinen, ohne die jeweiligen Nachteile dieser Werkstoffe in Kauf nehmen zu müssen, ist es bekannt (AT-B-369 145), den weicheren Lagerwerkstoff in nutenartige Ausnehmungen der härteren Lagermetallschicht einzubetten, wobei sich die nutenartigen Ausnehmungen zumindest im wesentlichen in Laufrichtung erstrecken. Da der gegenseitige Abstand der nutenartigen Ausnehmungen begrenzt ist, ergibt sich eine feine Verteilung des härteren und weicheren Lagerwerkstoffes über die Lauffflächenbreite, so daß die einzelnen Lagerwerkstoffe auch in einem örtlichen Belastungsbereich nicht für sich, sondern nur zusammen wirksam werden können, was die Nachteile der einzelnen Lagerwerkstoffe im wesentlichen ausschaltet. Die Lagermetallschicht aus einem härteren Werkstoff übernimmt dabei eine Stützfunktion, die eine relative Entlastung des weicheren Werkstoffes bedingt und eine höhere Dauer- und Verschleißfestigkeit zur Folge hat. Lager dieser Art verhalten sich deshalb weitgehend wie Lager mit einer durchgehenden Laufschicht aus einem weicheren Lagerwerkstoff, ohne jedoch den Nachteil eines höheren Verschleißes aufzuweisen. Trotzdem sind diese Lager nicht für alle Anwendungsfälle gleich gut geeignet, weil die härtere Lagermetallschicht unter schwierigen Bedingungen eine ausreichende Anpassung an übermäßige Verformungen nicht immer erlaubt. Bei solchen Anpassungsforderungen, wie sie bei Einlaufvorgängen gestellt werden können, muß folglich auf herkömmliche Lager mit einer weicheren Lagermetallschicht ausgewichen werden, die allerdings keine befriedigende Dauer- und Verschleißfestigkeit aufweist.

Schließlich ist ein Gleitlager bekanntgeworden (FR-A-2 157 072), dessen Lagermetallschicht mit Vertiefungen in Form eines Kreuzgewindes versehen ist, das mit einem weicheren Lagerwerkstoff ausgefüllt wird, der eine durchgehende Laufschicht bilden kann. Diese Laufschicht weist im Bereich der Stege des Kreuzgewindes eine Überdeckungshöhe auf, die der 0,2- bis 0,3-fachen Tiefe der Nuten entspricht und im zulässigen maximalen Grenzbereich für die Schichtdicke durchgehend gleich dicker Laufschichten liegt. Da für das Auftreten von Dauerbrüchen aber nicht nur die Überdeckungshöhe der Stege, sondern auch die Nuttiefe entscheidend ist, werden die mit der durchgehenden Schicht aus einem weicheren Lagerwerkstoff gewonnenen Verbesserungen hinsichtlich der Anpassungsverhältnisse mit einer erheblichen Verschlechterung bezüglich der Dauer- und Verschleißfestigkeit solcher Lager erkauft.

Der Erfindung liegt somit die Aufgabe zugrunde, ein hochbelastbares Gleitlager der eingangs geschilderten Art so zu verbessern, daß trotz seiner guten Anpassungsfähigkeit an größere Verformungen eine hohe Dauer- und Verschleißfestigkeit erreicht wird.

Die Erfindung löst die gestellte Aufgabe dadurch, daß die Lagermetallschicht durch den Lagerwerkstoff als Verschleißschicht bis zu einer höchstens der Tiefe der nutenartigen Ausnehmungen entsprechenden Höhe durchgehend abgedeckt ist und daß der gegenseitige Abstand der Ausnehmungen kleiner oder gleich einem oberen Grenzwert

$$a_o = 500 + 0,5\,d + 0,01\,d^2$$

ist, der sich beim Einsetzen des jeweiligen in Millimeter gemessenen Lagerdurchmessers d in Mikrometer ergibt.

Da die Lagermetallschicht durch den weicheren Lagerwerkstoff durchgehend abgedeckt wird, werden die Eigenschaften des Gleitlagers während des Einlaufvorganges, wie vorsehbar, verbessert. Trotz der durchgehenden Laufschicht aus einem weicheren Lagerwerkstoff verschlechtert sich jedoch das Dauer- und Verschleißverhalten in überraschender Weise nicht. Dies ist wohl darauf zurückzuführen, daß die durchgehende, weichere Lagerwerkstoffschicht als Verschleißschicht eine Dicke aufweist, die unterhalb des zulässigen, verschleißbedingten Lauffflächenabtrages liegt, so daß sich auch im Bereich der nutenartigen Ausnehmungen, deren Tiefe in Abhängigkeit von der Überdeckungshöhe der Verschleißschicht ebenfalls begrenzt wird, keine vorzeitigen Dauerbrüche einstellen. Nach dem Verschleiß des weicheren Lagerwerkstoffes im Ausmaß der Überdeckungshöhe kommt die härtere Lagermetallschicht zum Tragen, die dann die hohe Verschleißfestigkeit sicherstellt. Da die Verschleißerscheinungen während des Einlaufvorganges am größten sind und während dieses Einlaufvorganges die Wirkung des die Lagermetallschicht abdeckenden, weicheren Lagerwerkstoffes vorherrscht, braucht auf örtliche Überlastungen zufolge einer nicht ausreichenden Anpassung an notwendige Verformungen nicht durch eine besonders feine Verteilung von härterem und weicherem Lagerwerkstoff über die Lauffflächenbreite Rücksicht genommen zu werden. Es kann daher der gegenseitige Abstand der nutenartigen Ausnehmungen gegenüber dem Stand der Technik unter Umständen größer gewählt werden kann.

Damit die härtere Lagermetallschicht während der Lebensdauer eines Lagers wirksam werden kann, muß die sie abdeckende, weichere Schicht des Lagermetalls zumindest teilweise abgetragen werden. Geht man von dem Umstand aus, daß - abgesehen von dem zulässigen Spiel - die Tiefe der nutenartigen Ausnehmungen den zulässigen größten Verschleiß bestimmt, weil dann kein weicherer Lagerwerkstoff mehr vorhanden ist, sollte die maximale Überdeckungshöhe des weicheren Lagerwerkstoffes unter Berücksichtigung der geringeren Verschleißfestigkeit dieses Lagerwerkstoffes auf die Tiefe der nutenartigen Ausnehmungen abgestimmt sein. Aus diesem Grunde darf die Überdeckungshöhe des weicheren Lagerwerkstoffes die Tiefe der Ausnehmungen nicht übersteigen.

Vorteilhaftere Verhältnisse ergeben sich im allgemeinen, wenn der Lagerwerkstoff die Lagermetallschicht in einer Höhe abdeckt, die der 0,3- bis 0,7-fachen Tiefe der nutenartigen Ausnehmungen entspricht, weil die für eine hohe Dauer- und Verschleißfestigkeit bei guten Laufeigenschaften verantwortliche Verteilung von härteren und weicheren Laufflächenzonen bereits unmittelbar nach dem Einlaufvorgang wirksam werden kann, so daß die Gefahr einer unzulässigen Spielvergrößerung zufolge des Verschleißes der weicheren Überdeckungsschicht ausgeschaltet werden kann.

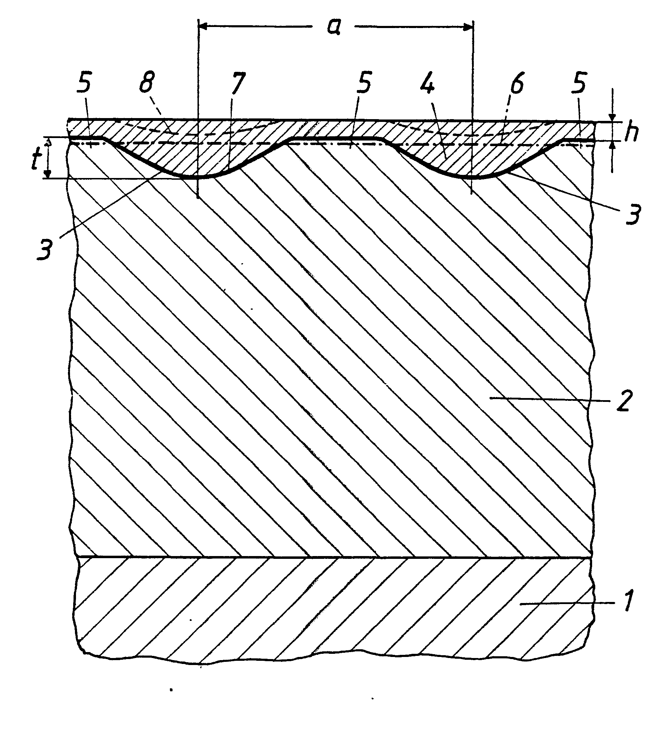

In der Zeichnung ist der Erfindungsgegenstand beispielsweise dargestellt, und zwar ist ein erfindungsgemäßes Gleitlager in einem Querschnitt schematisch dargestellt.

Das dargestellte Gleitlager besteht im wesentlichen aus einer stählernen Stützschale 1, auf der eine Lagermetallschicht 2 auf Aluminium- oder Kupferbasis aufgebracht ist. Diese Lagermetallschicht weist nutenartige Ausnehmungen 3 auf, die mit einem weicheren Lagerwerkstoff 4, beispielsweise mit einer Weißmetallegierung, ausgefüllt sind. Die Anordnung ist dabei so getroffen, daß der weichere Lagerwerkstoff 4 nicht nur die Ausnehmungen 3 ausfüllt, sondern auch die zwischen den Ausnehmungen 3 verbleibenden Stege 5 abdeckt, so daß sich zunächst eine durchgehende Laufschicht aus weicherem Lagerwerkstoff 4 ergibt, die gerade während der Einlaufperiode eine wünschenswerte Anpassung an größere Verformungen erlaubt. Der dabei auftretende Verschleiß führt zu einem teilweisen Abtragen des Lagerwerkstoffes 4, wobei die härtere Lagermetallschicht 2 zur Wirkung kommt und aufgrund der höheren Verschleißfestigkeit dem weiteren Verschleiß einen erheblichen Widerstand entgegensetzt. Ein in dieser Weise ausgebildetes Gleitlager verbindet daher hervorragende Einlaufeigenschaften mit einer hohen Dauer- und Verschleißfestigkeit. Da der die Lagermetallschicht 2 abdeckende, weichere Lagerwerkstoff 4 im allgemeinen keinem gleichmäßigen Verschleiß unterworfen wird, kommt die härtere Lagermetallschicht 2 zunächst nur bereichsweise zur Wirkung, wobei die damit verbundene bessere Stützwirkung die Laufflächenbereiche mit dem noch durchgehenden weicheren Lagerwerkstoff entlastet, so daß bei nachträglichen Lageveränderungen, wie sie durch ein Verziehen des Gehäuses oder durch den Lagerein- und -ausbau auftreten können, eine ausreichende Lauffläche aus weicherem Lagerwerkstoff vorhanden ist, der das Anpassen an die neuen- Bedingungen erheblich erleichtert. Damit die härtere Lagermetallschicht 2 bereichsweise zur Wirkung kommen kann, muß die Höhe h, mit der die Stege 5 zwischen den Ausnehmungen 3 vom Lagerwerkstoff 4 überdeckt sind, in ihrer Größe beschränkt bleiben. Nach einem bestimmten Verschleiß wird somit eine Lauffläche erhalten, die abwechselnd Zonen eines härteren und eines weicheren Werkstoffes aufweist, wie dies beispielsweise bei einem durch die strichpunktiert angedeutete Linie 6 gegebenen Abtrag der Fall ist. Die Kombinationswirkung zwischen dem weicheren Lagerwerkstoff 4 und der härteren Lagermetallschicht 2 ist selbstverständlich nur im Bereich der Tiefe t der Ausnehmungen 3 möglich, so daß - bleibt die damit verbundene Durchmesservergrößerung unberücksichtigt - die Tiefe t der Ausnehmungen 3 die Lebensdauer des Lagers im wesentlichen bestimmt. Die Höhe der die Stege 5 überdeckenden Schicht des neuen Lagers soll daher auf die Ausnehmungstiefe t abgestimmt sein. Je nach den gegebenen Bedingungen ist die Höhe h zu wählen, wobei als obere Grenze gilt: $h = t$. Der im allgemeinen vorteilhafte Bereich der Überdeckungshöhe liegt bei $h = 0{,}3$ bis $0{,}7\ t$.

Der von Ausnehmungsmitte zu Ausnehmungsmitte gemessene gegenseitige Abstand a der Ausnehmungen 3 bestimmt die Verteilung des weicheren Lagerwerkstoffes 4 in der härteren Lagermetallschicht 2 über die Laufflächenbreite. Dieser Abstand a wird bei den bekannten, nicht durch den Lagerwerkstoff 4 abgedeckten Lagern vergleichsweise klein gewählt, um aufgrund der feinen Verteilung von weichen und härteren Werkstoffen auch im örtlichen Bereich eine Kombinationswirkung sicherzustellen, was insbesondere bei den Einlaufvorgängen, bei denen die Gefahr örtlicher Überlastungen am größten ist, von besonderer Bedeutung ist. Da beim erfindungsgemäßen Gleitlager der Einlaufvorgang durch den eine durchgehende Verschleißschicht bildenden Lagerwerkstoff 4 entschärft ist, könnte der Abstand a unter Umständen größer gewählt werden. Wegen des während des Einlaufvorganges größeren Verschleißausmaßes kann auch die Ausnehmungstiefe t kleiner sein, weil eben während der Einlaufzeit die durchgehende Verschleißschicht aus dem Lagerwerkstoff 4 abgetragen wird.

Die die Lagermetallschicht 2 durchgehend abdeckende Verschleißschicht aus dem Lagerwerkstoff 4 stellt daher vorteilhafte Bedingungen insbesondere für den Einlaufvorgang sicher, wobei die Rißgefahr im Bereich der Stege 5 keine nachteiligen Folgen mit sich bringt.

Da es durchaus üblich ist, zwischen einem weicheren Lagerwerkstoff und einem härteren Lagermetall eine Sperrschicht, beispielsweise auf Nickelbasis, vorzusehen, braucht wohl nicht auf das Vorhandensein einer solchen Sperrschicht 7 besonders hingewiesen zu werden. Für Sonderfälle könnte die die Lagermetallschicht 2 durchgehend abdeckende Verschleißschicht aus dem Lagerwerkstoff 4 auch entsprechend den Ausnehmungen 3 profiliert ausgebildet sein, wie dies durch die strichlierte Linie 8 angedeutet ist.

**Patentansprüche**

1. Hochbelastbares Gleitlager, bestehend aus einer tragenden Stützschale (1) und aus einer auf der Stützschale (1) aufgebrachten Lagermetallschicht (2), die über die Laufflächenbreite verteilte, sich zumindest im wesentlichen in Laufrichtung erstreckende, nutenartige Ausnehmungen (3) zur Aufnahme eines weicheren Lagerwerkstoffes aufweist, wobei die nutenartigen Ausnehmungen (3) mit einem gegenseitigen, von Ausnehmungsmitte zu Ausnehmungsmitte gemessenen Abstand (a) von höchstens 10 mm voneinander angeordnet sind, dadurch gekennzeichnet, daß die Lagermetallschicht (2) durch den Lagerwerkstoff (4) als Verschleißschicht bis zu einer höchstens der Tiefe (t) der nutenartigen Ausnehmungen (3) entsprechenden Höhe (h) durchgehend abgedeckt ist und daß der gegenseitige Abstand (a) der Ausnehmungen (3) kleiner oder gleich einem oberen Grenzwert

$$a_o = 500 + 0,5\,d + 0,01\,d^2$$

ist, der sich beim Einsetzen des jeweiligen in Millimeter gemessenen Lagerdurchmessers (d) in Mikrometer ergibt.

2. Gleitlager nach Anspruch 1, dadurch gekennzeichnet, daß der Lagerwerkstoff (4) die Lagermetallschicht (2) in einer Höhe (h) abdeckt, die der 0,3- bis 0,7-fachen Tiefe (t) der Ausnehmungen (3) entspricht.

**Claims**

1. A high-duty sliding surface bearing comprising a load-carrying backing shell (1) and a bearing metal layer (2), which has been applied to the backing shell (1) and is formed with groovelike recesses (3), which serve to contain a softer bearing material and extend at least substantially in the running direction and are distributed over the width of the sliding surface and have a centre spacig (a) not in excess of 10 mm, characterized in that the bearing material (4) constitutes a wearing layer, which continuously covers the bearing metal layer (2) in a height (h) that is not in excess of the depth (t) of the groovelike recesses and that the spacing (a) of the recesses (3) is smaller than or equal to an upper limit.

$$a_o = 500 + 0.5\,d + 0.01\,d^2$$

in micrometres, where $\underline{d}$ is the diameter of the bearing in milimetres.

2. A sliding surface bearing according to claim 1, characterized in that the bearing material (4) covers the bearing metal layer (2) in a height (h) which is 0.3 to 0.7 the the depth (t) of the recesses (3).

**Revendications**

1. Palier lisse conçu pour charges élevées, se composant d'une coquille d'appui (1) porteuse et d'une couche (2) de métal anti-friction qui, déposée sur la coquille d'appui (1), présente des évidements (3) du genre rainures 5 étendant au moins essentiellement dans le sens du glissement et réparties sur la largeur de la surface de glissement pour recevoir, noyé, un matériau anti-friction relativement plus tendre, tandis que les évidements (3) du genre rainures sont agencés à une distance (a) l'un de l'autre, mesurée de centre de rainure à centre de rainure, faisant au plus 10 mm,

caractérisé par le fait que la couche (2) de métal anti-friction est recouverte de manière continue par le matériau (4) anti-friction jusqu'à une hauteur (h) correspondant au maximum à la profondeur (t) des évidements (3) du genre rainures, et que la distance réciproque (a) des évidements (3) est inférieure ou égale à une valeur limite supérieure de

$$a_o = 500 + 0,5\,d + 0,01\,d^2,$$

qui est le résultat, exprimé en micromètres, obtenu en introduisant le diamètre (d) du palier mesuré dans chaque cas d'espèce en millimètres.

2. Palier lisse selon la revendication 1, caractérisé par le fait que le matériau (4) anti-friction recouvre la couche (2) de métal anti-friction sur une hauteur (h) qui équivaut à 0,3 à 0,7 fois la profondeur (t) des évidements (3).